**Europäisches Patentamt**

**European Patent Office**

**Office européen des brevets**

(19)

(11) Veröffentlichungsnummer: **0 182 938**

**A1**

(12) # EUROPÄISCHE PATENTANMELDUNG

(21) Anmeldenummer: **84114836.4**

(22) Anmeldetag: **06.12.84**

(51) Int. Cl.⁴: **B 65 G 47/82**

(30) Priorität: **31.10.84 DE 3439885**

(43) Veröffentlichungstag der Anmeldung:
**04.06.86 Patentblatt 86/23**

(84) Benannte Vertragsstaaten:
**AT BE CH DE FR GB IT LI LU NL SE**

(71) Anmelder: **Masyc AG**
**Pumpwerkstrasse 25**
**CH-4142 Münchenstein(CH)**

(72) Erfinder: **Linz, Urs**
**Obere Grabenstrasse 590**
**C-4227 Buesserach(CH)**

(74) Vertreter: **Patentanwälte Müller-Boré, Deufel, Schön,**
**Hertel, Lewald, Otto**
**Postfach 26 02 47 Isartorplatz 6**
**D-8000 München 26(DE)**

(54) **Umsetzer für Stückgutförderer.**

(57) Die Umsetzvorrichtung (18) zum wahlweisen Umsetzen von Stückgütern weist einen Dreharm (22) auf, der zum Umsetzen beispielsweise eines Behälters (40) von einem Stückgutförderer (10) auf einen anderen Stückgutförderer (12) verschwenkt wird, wobei die Schwenkrichtung des Armes in Richtung des Pfeiles (44) gleichsinnig zu der Förderrichtung in Richtung des Pfeiles (46) verläuft. An dem Dreharm (22) sind Anlegeelemente (26, 28) befestigt, deren Anlegeflächen (50, 52) über einen Zahnrad-Kettentrieb während der Drehbewegung parallel zur Förderrichtung verbleiben.

FIG. 2

**EP 0 182 938 A1**

## Beschreibung

Die Erfindung betrifft eine Vorrichtung zum wahlweisen Umsetzen von Stückgütern von der Förderbahn eines ersten Stückgutförderers auf die Förderbahn eines zweiten Stückgutförderers mittels eines Umsetzförderers.

Es ist eine Umsetzanlage bekannt (DE-OS 22 59 273), bei welcher im Bereich der Förderebene Transportketten mit Hebegliedern über Führungsschienen geführt sind, auf denen Nockenbahnen ausgebildet sind, auf die die Hebeglieder mittels einer Auflauframpe hochgeführt und von denen die Hebeglieder mittels Ablauframpen heruntergeführt werden. Eine derartige, insbesondere für schwere Stückgüter geeignete Anlage ist sehr aufwendig und teuer. Ferner ist eine Umsetzanlage bekannt, bei welcher in Form einer Weiche unter einem Winkel angeordnete Rollen den Übergang von einem Stückgutförderer zu dem anderen Stückgutförderer erbringen. Nachteilig ist, daß diese Umsetzvorrichtung eine große Anzahl verschiedener Rollen erfordert und daß ein Übergabeort nur mit einem nicht vertretbaren Aufwand innerhalb der Anlage verlegt werden kann.

Der Erfindung liegt die Aufgabe zugrunde, eine Umsetzvorrichtung insbesondere für nicht zu schweres gleichförmiges Stückgut zu schaffen, welche nur wenig bewegte Teile aufweist und welche ohne große konstruktive Änderungen in einer beliebigen Stellung an Stückgutförderern angeordnet werden kann.

Diese Aufgabe wird erfindungsgemäß dadurch gelöst, daß neben dem ersten Stückgutförderer ein Dreharm angeordnet ist, daß die Drehrichtung des Dreharms in Förderrichtung gerichtet ist, und daß der Dreharm nach dem Umsetzen des Stückgutes auf den zweiten Stückgutförderer aus der Förderbahn des ersten Stückgutförderers in die Ruhestellung parallel zu dem Stückgutförderer schwenkt.

Die erfindungsgemäße Umsetzvorrichtung kann unabhängig von den Stückgutförderern angeordnet werden und erfordert keinerlei Eingriffe an den Stückgutförderern. Bei einer Betätigung der Umsetzvorrichtun schwenkt ein Dreharm über den ersten Stückgutförderer und schiebt während seiner Drehung ein auf dem ersten Stückgutförderer herangeführtes Stückgut während des Weiterlaufes in Förderrichtung auf den zweiten Stückgutförderer. Nach der Übergabe des Stückgutes von dem ersten Stückgutförderer auf den zweiten Stückgutförderer behält der Dreharm der Umsetzvorrichtung seinen Drehsinn bei, so daß er in eine parallele Ruhestellung zurückschwenken kann, ohne mit nacheilenden Stückgütern auf dem ersten Stückgutförderer zu kollidieren. Die Übergabe des Stückgutes von dem einen zu dem anderen Stückgutförderer erfolgt nicht mit Schwung, sondern das Stückgut, das beispielsweise aus einem mehr oder weniger gefüllten Container bestehen kann, wie sie in Arzneimittelgroßhandlungen Verwendung finden, wird gleichmäßig von dem einen Stückgutförderer auf den anderen Stückgutförderer geschoben. Die Länge des Dreharms ist vorzugsweise wenig größer gewählt als die Breite des ersten Stückgutförderers.

Gemäß einer bevorzugten Ausführungsform ist der Dreharm als Doppelarm ausgebildet und bei jedem Umsetzvorgang schwenkt der Arm um 180° in einer Horizontalebene. Dabei ist Voraussetzung, daß neben dem ersten Stückgutförderer ausreichend Raum zur Verfügung steht, damit der Dreharm verschwenkt werden kann. Bei jeder Übergabe führt der Dreharm der Umsetzvorrichtung eine Schwenkung um 180° aus, so daß abwechselnd jedes Ende des Armes zum Umsetzen eines Stückgutes benutzt wird.

Wenn neben dem ersten Stückgutförderer nicht ausreichend Platz zur Verfügung steht oder wenn mehrere Stückgutförderer parallel nebeneinander angeordnet sind und beispielsweise von einem zweiten auf einen dritten Stückgutförderer umgesetzt werden soll, kann vorgesehen werden,
daß der Dreharm nach dem Umsetzen eines Stückgutes senkrecht nach oben aus der Förderebene des Stückgutförderers
schwenkt , von welchem umgesetzt werden soll, um anschließend in die parallele Ruhestellung neben dem Stückgutförderer zurückzuschwenken. Die Umsetzvorrichtung kann dabei am Rahmen des Stückgutförderers befestigt sein, auf
dem Boden verankert sein oder von der Decke oder einem
Gerüst über den Stückgutförderern gehalten werden.

In Weiterbildung der Erfindung sind an dem freien Ende oder
den freien Enden des Dreharmes Anlegeelemente angeordnet
und die Fläche des oder der Anlegeelemente, die mit dem
Stückgut in Anlage gelangen, gelangt  während der Drehbewegung des Dreharms parallel zur Förderrichtung. Damit
wird gewährleistet, daß eine großflächige Anlage während
des Umsetzvofgangs aufrechterhalten bleibt und kein Verkanten oder Verdrehen des Stückgutes erfolgen kann.

Vorzugsweise ist koaxial zur Drehachse des Dreharmes ein
ortsfestes Zahnrad angeordnet, an den Drehachsen der Anlegeelemente ist drehfest ein Zahnrad mit gleicher Zahnzahl vorgesehen und über die Zahnräder ist eine Kette geführt. Bei der Drehbewegung des Dreharmes rollt die Kette
auf dem ortsfesten Zahnrad an der Drehachse des Dreharmes
ab und treibt damit die an den Achsen der Anlegeelemente
angeordneten Zahnräder an, so daß die parallele Ausrichtung der Anlegeelemente zur Förderrichtung beibehalten
wird.

Vorzugsweise weist die Anlagefläche der Anlegeelemente
eine erhöhte Reibung auf, insbesondere kann die Fläche
geriffelt sein oder aus einem geriffelten Gummi bestehend.

Ferner ist die Anlagefläche parallel zur Außenfläche des umzusetzenden Stückgutes ausgebildet, das heißt bei Verwendung von Containern mit geneigter Außenwand ist die Anlagefläche entsprechend geneigt.

Um dem übergebenen Stückgut auf dem zweiten Stückgutförderer eine im Normalfall nicht erforderliche Seitenführung zu geben ist vorzugsweise an der dem ersten Stückgutförderer entgegengesetzten Seite des zweiten Stückgutförderers in Höhe des Dreharmes eine Anlagefläche angeordnet.

Die Umsetzvorrichtung wird vorzugsweise über einen Motor angetrieben, dessen Welle mit der Drechachse des Dreharmes verbunden ist. Die Stückgutförderer können Bandförderer oder Rollenbahnen sein, wobei der erste Stückgutförderer ein Bandförderer und der zweite Stückgutförderer eine Rollenbahn oder umgekehrt sein kann.

Ausführungsbeispiele der Erfindung werden anhand der Zeichnung erläutert. Es zeigen:

Fig. 1 eine perspektivische Darstellung der Umsetzvorrichtung in Ruhestellung,

Fig. 2 die Umsetzvorrichtung nach Fig. 1 während des Ausschleusens eines Behälters,

Fig. 3 eine Draufsicht auf die Vorrichtung nach Fig. 1,

Fig. 4 eine Draufsicht auf die Vorrichtung nach Fig. 2,

Fig. 5 eine Ansicht in Richtung des Pfeiles V in Fig. 3 und

Fig. 6 einen Schnitt nach der Linie VI-VI in Fig. 5.

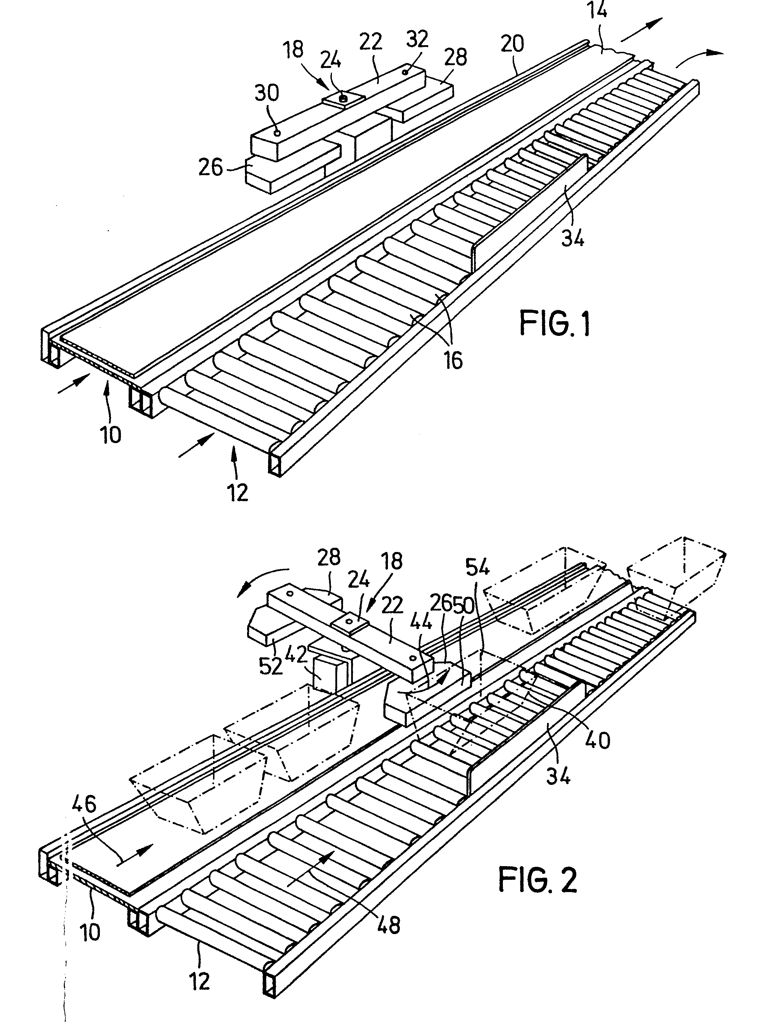

Fig. 1 zeigt in perspektivischer Darstellung einen Bandförderer 10 und eine dazu parallel angeordnete Rollenbahn 12. Auf dem Bandförderer läuft ein Transportband 14 um und die Rollenbahn weist Transportrollen 16 auf. Neben dem Bandförderer 10 ist eine Umsetzvorrichtung oder ein Ausschleuser 18 angeordnet. Die Umsetzvorrichtung ist bei der gezeigten Ausführungsform an dem Rahmen 20 des Bandförderers 10 befestigt. Die Umsetzvorrichtung 18 weist einen Dreharm 22 auf, der um eine Achse 24 verschwenkbar ist. An beiden Enden des Dreharmes 22, der als Doppeldreharm ausgebildet ist, sind Anlegeelemente 26 bzw. 28 vorgesehen, welche um Drehachsen 30 bzw. 32 drehbar sind. An der dem ersten Stückgutförderer 10 entgegengesetzten Seite des zweiten Stückgutförderers 12 ist in Höhe der Umsetzvorrichtung 18 eine Anlagefläche 34 angeordnet, deren Funktion später erläutert wird. Fig. 1 zeigt die Umsetzvorrichtung in Ruhestellung, das heißt, auf dem Transportband 14 gefördertes Stückgut wird nicht auf den Stückgutförderer 12 umgesetzt.

Fig. 2 zeigt die Umsetzvorrichtung 18 während des Umsetzens oder Ausschleusens eines Behälters 40. Derartige Behälter werden beispielsweise in Arzneimittelgroßhandlungen zum Zusammenstellen von Apothekenbestellungen verwendet und weisen im gefüllten Zustand ein Gewicht von etwa 30 bis 50 Kilogramm auf. Die Behälter sind im Querschnitt trapezförmig, um ineinander gesetzt werden zu können. Wenn ein Behälter 40 von dem ersten Stückgutförderer 10 auf den zweiten Stückgutförderer 12 umgesetzt werden soll, wird der mit der Drehachse 24 des Dreharmes 22 der Umsetzvorrichtung 18 verbundene Motor 42 eingeschaltet und das Anlegestück 26 legt sich während der Drehbewegung des Dreharmes 22 in Richtung des Pfeiles 44 an die Außenseite des Behälters 40 an. Während des Weiterdrehens wird der Behälter, der seine Förderrichtung in Richtung des Pfeiles 46 beibehält, etwa auf einer Parabel auf den Stückgutförderer 12 geschoben. Dort wird er dann in Richtung des Pfeiles 48 weitertransportiert. Wie aus den Fig. 1 und 2 zu ersehen ist, behalten die Anlegestücke 26 und 28 während der Drehbewegung ihre parallele Lage zu den Stückgutförderern bei, so daß die Anlageflächen 50 bzw. 52 immer parallel zu den Außenflächen 54 der Behälter 40 verbleiben. Das Umsetzen des Behälters 40 von dem ersten Stückgutförderer 10 auf den zweiten Stückgutförderer 12 erfolgt nicht mit Schwung, sondern der Behälter wird durch den Dreharm 22 auf die Rollenbahn 12 aufgeschoben. Sollte die Drehgeschwindigkeit des Dreharmes dennoch zu groß sein und der Behälter 40 eine Beschleuningung senkrecht zu der Förderrichtung des Stückgutförderers 12 erfahren, so verhindert die Anlegefläche 34, daß der Behälter 40 von dem zweiten Stückgutförderer gelangen kann.

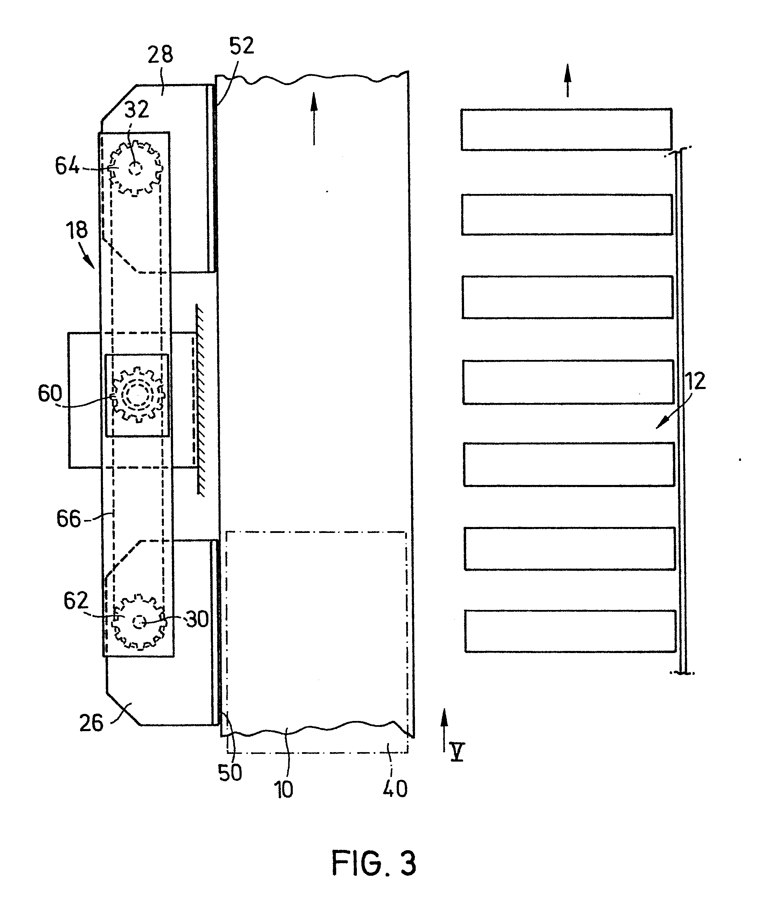

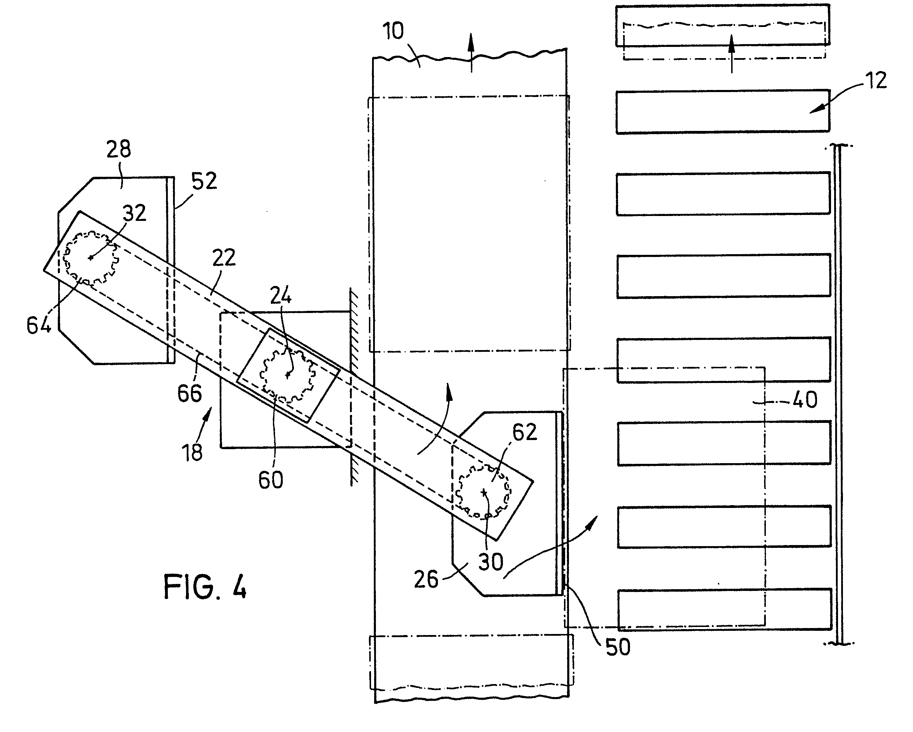

Die Fig. 3 und 4 zeigen in vergrößerter Darstellung in Draufsicht die Umsetzvorrichtung 18 in Ruhestellung bzw. während des Ausschleusens oder Umsetzens eines Behälters 40. Aus diesen Darstellungen ist gut die Parallelstellung der Anlageflächen 50 bzw. 52 der Anlegeelemente 26 bzw. 28 zu erkennen. Um dies zu erreichen, ist koaxial zur Drehachse 24 des Dreharmes 22 ein ortsfestes Zahnrad 60 angeordnet und an den Drehachsen 30 und 32 der Anlegeelemente 26 und 28 sind Zahnräder 62 und 64 angeordnet. Die Zahnräder 60, 62 und 64 weisen die gleiche Zahnzahl auf. Um die Zahnräder 62 und 64 ist eine Kette 66 gelegt, in welche ebenfalls das Zahnrad 60 eingreift. Beim Verschwenken des Dreharms 22 um die Drehachse 24 rollt die Kette 66 auf dem Zahnrad 60 ab und treibt dabei die Zahnräder 62 und 64 an, wobei eine Relativbewegung der Anlegeelemente 26 und 28 gegenüber dem Dreharm 22 erfolgt. Da die Zahnräder die gleiche Zahnzahl aufweisen, erfolgt eine Übersetzung im Verhältnis 1 : 1, so daß keine Verzögerung oder Beschleunigung der Drehbewegung der Anlegeelemente 26 und 28 erfolgt. Damit verbleiben die Anlageflächen 50 und 52 parallel zur Förderrichtung der Stückgutförderer.

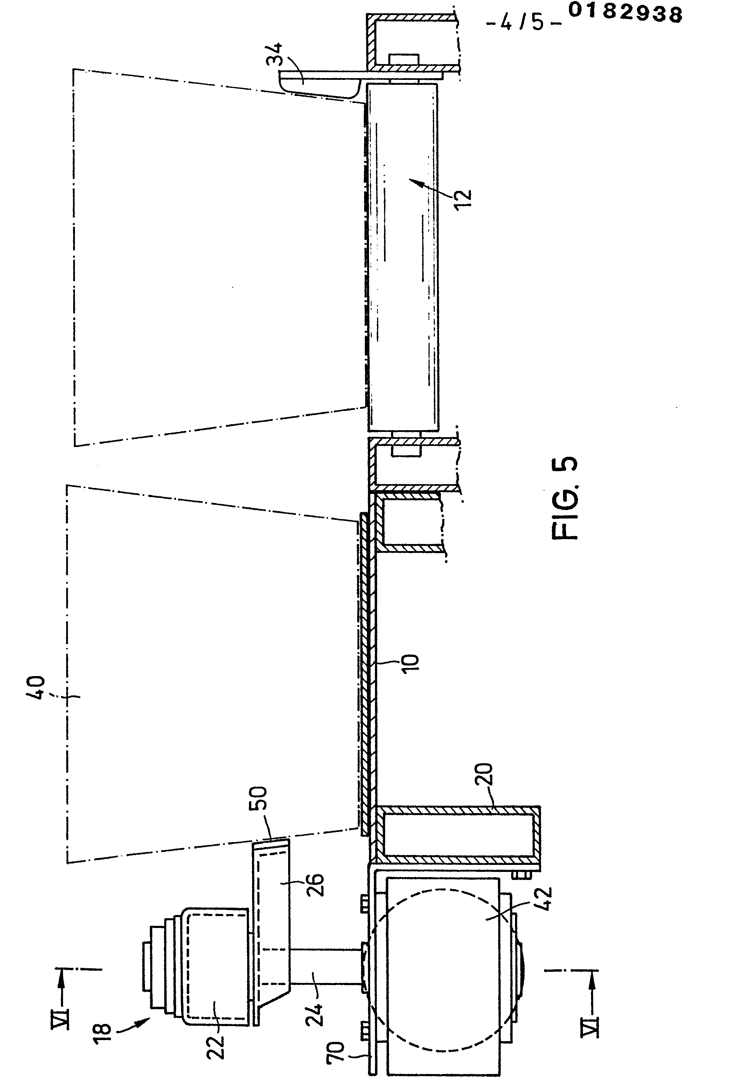

Fig. 5 zeigt eine Ansicht in Richtung des Pfeiles V, wobei der Stückgutförderer 10 und der Stückgutförderer 12 im Schnitt gezeigt sind. Aus Fig. 5 ist zu sehen, daß der Motor 42 der Umsetzvorrichtung 18 in einem Gehäuse 70 angeordnet ist, welches an dem Rahmen 20 des Bandförderers 10 befestigt ist. Ferner ist klar zu sehen, daß die Anlagefläche 50 parallel zur Außenseite des Behälters 40 ausgerichtet ist. Ebenfalls ist die Innenfläche der Anlagefläche 34 parallel zur gegenüberliegenden Seite des Behälters 40 verlaufend.

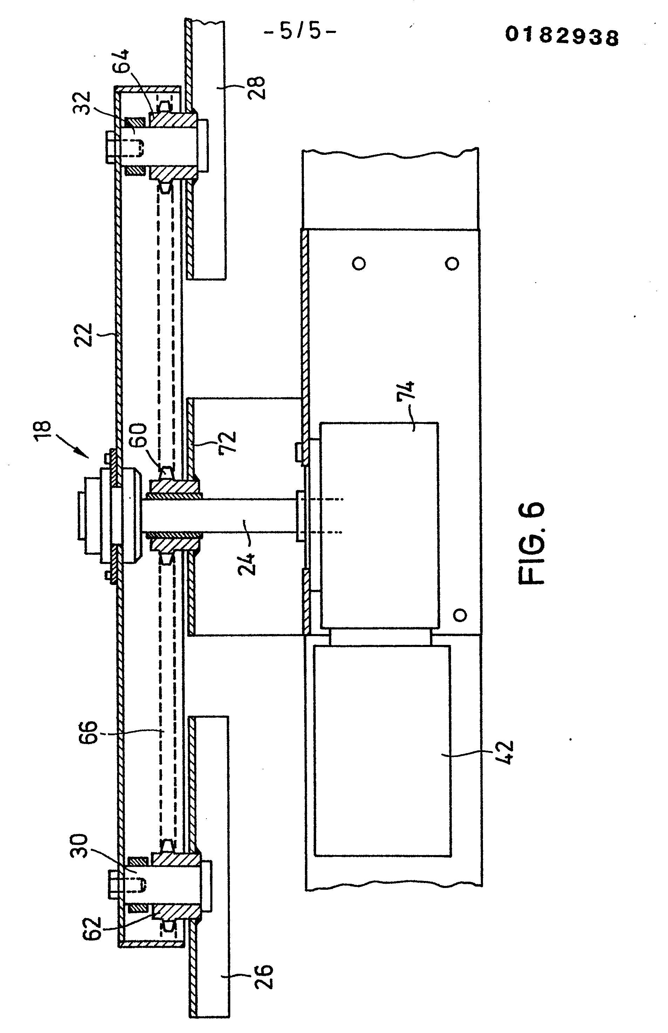

Fig. 6 zeigt einen Längsschnitt durch den Arm 22 der Umsetzvorrichtung 18. Das Zahnrad 60 ist in einem Gehäuse 72 drehfest angeordnet und die Zahnräder 62 bzw. 64 sind drehfest mit den Drehachsen 30 bzw. 32 der Anlageelemente 26 bzw. 28 verbunden. Ferner ist zu sehen, daß in die Kette 66 die Zähne der Zahnräder 60, 62 und 64 eingreifen. Zwischen der Drehachse 24 und dem Motor 42 ist ein Getriebe 74 angeordnet.

Die in den Fig. 1 bis 6 Umsetzvorrichtung kann nur an der Außenseite eines Stückgutförderers angebracht werden und benötigt für den Betrieb einen freien Raum neben dem Stückgutförderer. Wenn derartiger Raum nicht zur Verfügung steht oder wenn beispielsweise drei oder mehr Stückgutförderer parallel laufen und von einem zweiten auf einen dritten Stückgutförderer umgesetzt werden soll, ist es notwendig, daß der Arm nach dem Umsetzen von dem einen auf den anderen Stückgutförderer in seine Ausgangslage zurückkehrt, ohne daß er in den Bereich eines danebenliegenden Stückgutförderers schwenkt. Eine derartige Umsetzvorrichtung könnte einen Dreharm aufweisen, der an einem Ende drehbar gelagert ist und an dem anderen Ende ein während des Umsetzens parallel gehaltenes Anlegeelement aufweist. Nach dem Umsetzen von einem Stückgutförderer auf einen anderen könnte der Dreharm senkrecht zu der Oberfläche des Stückgutförderers hochgeschwenkt und in der senkrechten Haltung um 90° zurückgeschwenkt werden, um anschließend in die parallele Ruhestellung neben den Stückgutförderer wieder herabgeschwenkt zu werden.

Die Anlageflächen 50 und 52 weisen vorzugsweise eine erhöhte Reibung auf, so daß der Kontakt des umzusetzenden Stückgutes, beispielsweise des Behälters 40 während des ganzen Umsetzvorganges gewährleistet ist, Beispielsweise könnten die Anlegeflächen 50 und 52 aus einem genoppten oder geriffelten Gummi bestehen. In den Darstellungen ist gezeigt, daß die Umsetzvorrichtung an dem Rahmen des ersten Stückgutförderers befestigt ist. Jedoch könnte die Umsetzvorrichtung auch unabhängig von dem Stückgutförderer auf dem Boden verankert sein oder sie könnte von der Decke oder einem Gerüst über geeignete Träger gehalten werden.

0182938

Ansprüche

1. Vorrichtung zum wahlweisen Umsetzen von Stückgütern von der Förderbahn eines ersten Stückgutförderers (10) auf die Förderbahn eines zweiten Stückgutförderers (12) mittels eines Umsetzförderers (18), dadurch gekennzeichnet, daß neben dem ersten Stückgutförderer (10) ein Dreharm (22) angeordnet ist, daß die Drehrichtung (44) des Dreharmes (22) in Förderrichtung (46) gerichtet ist und daß der Dreharm (22) nach dem Umsetzen des Stückgutes (40) von dem ersten Stückgutförderer (10) auf den zweiten Stückgutförderer (12) aus der Förderbahn des ersten Stückgutförderers (10) in die Ruhestellung parallel zu dem Stückgutförderer (10) schwenkt.

2. Vorrichtung nach Anspruch 1, dadurch gekennzeichnet, daß der Dreharm (22) als Doppelarm ausgebildet ist und bei jedem Umsetzvorgang um 180° in einer Horizontalebene verschwenkt wird.

3. Vorrichtung nach Anspruch 1, dadurch gekennzeichnet, daß der Dreharm nach dem Umsetzen eines Stückgutes senkrecht zur Förderebene des ersten Stückgutförderers aus der Förderbahn in die Ausgangsstellung parallel zu dem ersten Stückgutförderer verschwenkt wird.

4. Vorrichtung nach einem der Ansprüche 1 bis 3, dadurch gekennzeichnet, daß am freien Ende oder den freien Enden des Dreharmes (22) Anlegeelemente (26, 28) angeordnet sind und daß die Anlageflächen (50, 52) der Anlegeelemente (26, 28) während der Drehbewegung des Dreharmes (22) parallel zur Förderrichtung (46) verbleiben.

5. Vorrichtung nach Anspruch 4, dadurch gekennzeichnet, daß koaxial zur Drehachse (24) des Dreharmes (22) ein ortsfestes Zahnrad (60) angeordnet ist, daß an den Drehachsen (30, 32) der Anlegeelemente (26, 28) jeweils drehfest ein Zahnrad (62, 64) mit gleicher Zahnzahl vorgesehen ist und daß über die Zahnräder (60, 62, 64) eine Kette (66) geführt ist.

6. Vorrichtung nach Anspruch 4 oder 5, dadurch gekennzeichnet, daß die Anlagefläche (50, 52) des Anlegeelementes (26, 28) eine erhöhte Reibung aufweist.

7. Vorrichtung nach einem der Ansprüche 4 bis 6, dadurch gekennzeichnet, daß die Anlagefläche (50, 52) parallel ist zur Außenfläche des umzusetzenden Stückgutes (40).

8. Vorrichtung nach einem der Ansprüche 1 bis 7, dadurch gekennzeichnet, daß an der dem ersten Stückgutförderer (10) entgegengesetzten Seite des zweiten Stückgutförderers (12) in Höhe des Dreharmes (22) eine Anlagefläche (34) angeordnet ist.

9. Vorrichtung nach einem der Ansprüche 1 bis 8, dadurch gekennzeichnet, daß die Drehachse (24) des Dreharmes (22) mit der Welle eines Motors (42) verbunden ist.

10. Vorrichtung nach einem der Ansprüche 1 bis 9, dadurch gekennzeichnet, daß der erste Stückgutförderer (10) und der zweite Stückgutförderer (12) ein Bandförderer oder eine Rollenbahn ist.

0182938

FIG.1

FIG. 2

M 3765

0182938

FIG. 3

FIG. 4

M 3765

**FIG. 5**

M 3765

FIG. 6

0182938

M 3765

**0182938**

Nummer der Anmeldung

EP 84 11 4836

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 083 808 (GRAYBEAL)<br><br>* Ganzes Dokument *<br><br>--- | 1-5,7, 9,10 | B 65 G 47/82 |
| X | WO-A-8 400 144 (BAE AUTOMATED SYSTEMS, INC.)<br>* Ganzes Dokument *<br><br>--- | 1,2,4, 7 | |
| X | US-A-3 212 623 (GRIFFITH)<br><br>* Ganzes Dokument *<br><br>--- | 1,4,5, 7,8 | |
| A | GB-A-2 095 194 (CONTO CONTROL BRASCHOS + ACHENBACH KG)<br>* Seite 1, Zeilen 112-115 *<br><br>----- | 6 | |

RECHERCHIERTE
SACHGEBIETE (Int Cl 4)

B 65 G 47/00

Der vorliegende Recherchenbericht wurde für alle Patentansprüche erstellt

| Recherchenort | Abschlußdatum der Recherche | Prüfer |
|---|---|---|
| BERLIN | 21-01-1986 | SIMON J J P |